# EUROPEAN PATENT SPECIFICATION

(11) **EP 1 876 665 B1**
(45) Date of publication and mention of the grant of the patent: **05.10.2011**
(21) Application number: 06745749.9
(22) Date of filing: 27.04.2006
(51) Int. Cl.: H01M 4/96, H01M 4/86, H01M 8/10

(54) **ELECTRODE FOR FUEL CELL AND MEMBRANE ELECTRODE ASSEMBLY**
ELEKTRODE FÜR EINE BRENNSTOFFZELLE UND MEMBRAN-ELEKTRODENANORDNUNG
ÉLECTRODE POUR PILE À COMBUSTIBLE ET ENSEMBLE MEMBRANE-ELECTRODE

(30) Priority: 27.04.2005 JP 2005130265
(43) Date of publication of application: 09.01.2008
(73) Proprietor: Kabushikikaisha Equos Research, Tokyo 101-0021 (JP)
(72) Inventor: JOBOJI, Tohru c/o KABUSHIKI KAISHA EQUOS RESEARCH, Sapporo-shi, Hokkaido 0040015 (JP); YAMAMOTO, Taizo c/o KABUSHIKI KAISHA EQUOS RESEARCH, Sapporo-shi, Hokkaido 0040015 (JP); NAKATA, Toshihide c/o KABUSHIKI KAISHA EQUOS RESEARCH, Sapporo-shi, Hokkaido 0040015 (JP)
(74) Representative: Vossius & Partner
(86) International application number: PCT/JP2006/308821
(87) International publication number: WO 2006/118186

(56) References cited:
- WO-A1-2004/026792
- JP-A- 03 038 553
- JP-A- 09 328 308
- JP-A- 11 503 267
- JP-A- 2004 292 227
- US-A- 4 873 218

## Description

### TECHNICAL FIELD

The present invention relates to an electrode and a membrane electrode assembly of a fuel cell.

### BACKGROUND ART

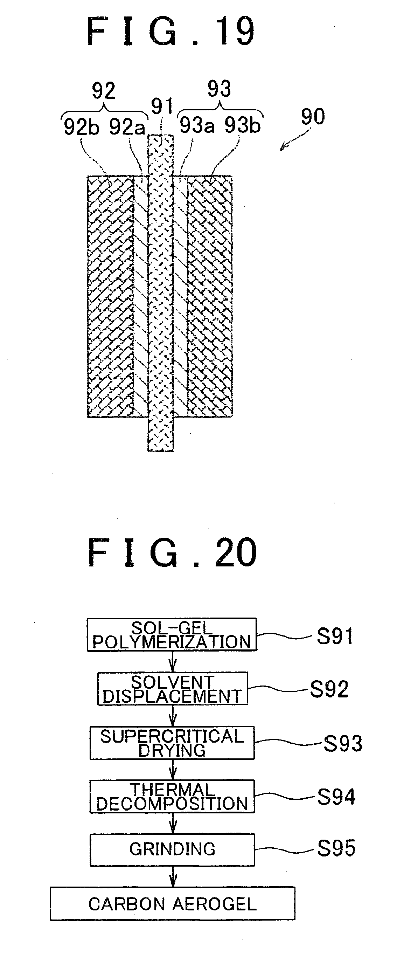

A membrane electrode assembly (MEA: Membrane Electrode Assembly) 90 of a fuel cell system as shown in FIG. 19 has been well known. The membrane electrode assembly 90 includes an electrolyte membrane 91 formed of a solid polymer membrane such as Nafion^{™} (produced by DuPont), a cathode electrode 93 assembled to one surface of the electrolyte membrane 91, to which air is supplied, and an anode electrode 92 assembled to the other surface of the electrolyte membrane 91, to which fuel such as hydrogen is supplied.

The cathode electrode 93 is formed of a gas-permeable base material, for example, carbon cloth, carbon paper, carbon felt and the like, and a cathode catalyst layer 93a formed at the side of the electrolyte membrane 91, on which the catalyst such as platinum (Pt) is carried. The portion of the cathode electrode 93 other than the cathode catalyst layer 93a is formed of the base material as a cathode diffusion layer 93b where air is diffused to the cathode catalyst layer 93a at the non-electrolyte side.

The anode electrode 92 is also formed of the aforementioned base material and an anode catalyst layer 92a formed at the side of the electrolyte membrane 91, on which the catalyst is carried. The portion of the anode electrode 92 other than the anode catalyst layer 92a is formed of the base material as an anode diffusion layer 92b where fuel is diffused to the anode catalyst layer 92a at the non-electrolyte side.

The membrane electrode assembly 90 is interposed between separators (not shown) to form a cell for the fuel cell as a minimum power generation unit. A large number of such cells are laminated to form a fuel cell stack. The air supply mechanism supplies air to the cathode catalyst layer 93a through the flow passage formed in the separator. The fuel supply mechanism supplies the fuel to the anode catalyst layer 92a through the flow passage formed in the separator. In this way, the fuel cell system is structured.

The membrane electrode assembly 90 generates the hydrogen ion (H⁺; proton) and the electron from the fuel through the electrochemical reaction in the anode catalyst layer 92a. The proton moves within the electrolyte membrane 91 toward the cathode catalyst layer 93a in the form of H₃O⁺ with water molecule. The electron passes through the load connected to the fuel cell system to flow into the cathode catalyst layer 93a. Meanwhile, the cathode catalyst layer 93a generates water from oxygen contained in air, proton and electron. The aforementioned electrochemical reactions successively occur to allow the fuel cell system to generate the electromotive force continuously.

The cathode catalyst layer 93a and the anode catalyst layer 92a are required to improve the gas diffusivity in the cathode electrode 93 and the anode electrode 92. The carbon aerogel has been proposed to satisfy the aforementioned requirement (see Patent Document 1). The carbon aerogel produced by using the polymer material of dihydroxybenzene and formaldehyde as the starting material has been disclosed in Patent Document 2.

The carbon aerogel is produced through the process below as shown in FIG. 20.

### (Sol-Gel Polymerization step S91)

In sol-gel polymerization step S91, the dihydroxybenzene, for example, resorcinol and catechol, and formaldehyde are subjected to the sol-gel polymerization in the presence of sodium carbonate to obtain an organic wet gel material.

### (Solvent Displacement step S92)

In solvent displacement step S92, the gel material is washed with the water-soluble organic solvent such as methanol and acetone such that water contained in the gel material is subjected to the solvent replacement with the water-soluble solvent.

### (Supercritical Drying step S93)

In supercritical drying, step S93, the solvent displaced gel material is put into a stainless pressure vessel, and CO₂ is introduced to regulate the pressure and temperature so as to be brought into the supercritical state. The CO₂ is gradually discharged to be shifted to the gas phase such that the supercritical drying is performed. The thus dried gel material contains primary particles that form a network structure, each of which has a diameter of 0.1 µm or smaller as well as considerably low bulk density of 100 mg/ml. Unlike the normal drying, the supercritical drying is performed without causing contraction due to capillary force such that the pore structure formed by cross-linking of the formaldehyde in the sol-gel polymerization step S91 is maintained as it is without being destroyed.

### (Thermal Decomposition step S94)

In thermal decomposition step S94, the thus dried gel substance is put under the nitrogen atmosphere at a high temperature to obtain a block of carbide. The thus obtained carbide holds the pore structure in the state prior to the carbonization.

### (Grinding step S95)

Finally in grinding step S95, the block of the carbide is subjected to the grinding process in the grinder to obtain the carbon aerogel powder.

The use of the thus obtained carbon aerogel is expected to allow the fuel cell to improve its generating efficiency. The particle size of the carbon aerogel may be reduced to be considerably small so as to reduce each thickness of the catalyst layers 93a and 92a of the cathode electrode 93 and the anode electrode 92, respectively. Accordingly, each thickness of the cathode electrode 93 and the anode electrode 92, and accordingly, the entire thickness of the fuel cell may further be reduced.

Patent Document 1: Published patent application, Japanese translation of PCT international application No. HEI-11-503267.
Patent Document 2: US Patent No.4873218

### DISCLOSURE OF THE INVENTION

### Problem to be Solved by the Invention

However, as a result of the detailed examination for the carbon aerogel disclosed in Patent Document 2 performed by the inventors, the carbide derived from thermal decomposition process S94 shown in FIG. 20 maintains a pore structure, however, most of the pore structure of the carbon aerogel powder obtained by grinding process performed by the mechanical grinder with high grinding performance has been destroyed.

In the case where the thus ground carbon aerogel is used for the cathode catalyst layer and the anode catalyst layer of the fuel cell, the output of the fuel cell system is likely to be lowered because most of the pore structure has been destroyed.

On the other hand, grinding the carbide using the mechanical grinder with relatively low grinding performance so as to maintain the pore structure, the carbon aerogel doesn't become sufficiently small. In this case, the resistance upon the use of the carbon aerogel for the cathode catalyst layer and the carbon catalyst layer is increased, thus lowering the output of the fuel cell system as well.

The present invention takes into consideration aforementioned actual condition and it is an object of the present invention to provide the fuel cell system, which realizes higher output.

### Means for Solving the Problem

The electrode of the fuel cell system according to the present invention includes a gas permeable base material and a catalyst layer formed on one surface of the base material, on which a catalyst is carried wherein the catalyst layer contains a carbon aerogel which is obtained through a process of grinding an organic wet gel material into a gel particle, performing solvent displacement by bringing the gel particle into contact with water soluble organic solvent, subjecting the gel particle to supercritical drying to obtain dry gel powder, and subjecting the dry gel powder to thermal decomposition.

The carbon aerogel contained in the electrode of the fuel cell is produced by grinding the organic wet gel compound and performing the solvent displacement thereafter. Therefore, the grinding is performed in the state where water is contained in pores of the gel material and the pores may be protected by the cushion effect of water contained therein compared with the grinding in the dry state. Accordingly, the pores are unlikely to be destroyed. As the organic wet gel compound has been preliminarily ground, the time for performing the solvent displacement may be reduced.

Accordingly, the carbon aerogel can maintain the pore structure that has been kept in the gel material. Therefore, the carbon aerogel can suppress the problem of the prior art, such as the destruction of the most part of the pore structures. Also, the carbon aerogel also suppresses the problem of the prior art, such that particle size doesn't become sufficiently small.

The cathode catalyst layer and the anode catalyst layer of the fuel cell, which contain the carbon aerogel allows carbon aerogel to maintain the pore structures and exhibit sufficient gas-permeability. As the catalyst layer may be formed in the state of maintaining the pore structure, the use of the aforementioned electrodes allows the gas diffusion performance to be improved, and the catalytic function to be sufficiently performed. Thus, the fuel cell system in which the aforementioned electrodes realizes the higher output.

As the cathode catalyst layer and the anode catalyst layer of the fuel cell contain the carbon aerogel can obtain sufficiently small particle size, the possibility becomes high to shorten the distance between those layers in the direction of thickness that is required for the gas diffusion in the catalyst layer. Accordingly the thickness is reduced certainly. Therefore, the electrodes allow the resistance to be lowered such that the fuel cell system realizes the higher output.

Consequently, the electrode of the fuel cell according to the present invention allows the fuel cell system to realize the higher output.

In the electrode of the fuel cell according to the present invention, preferably the organic wet gel material is formed by polymerizing polyhydroxybenzene and formaldehyde in the presence of a base catalyst.

The polyhydroxybenzene denotes the compound having two or more hydroxyl groups on the benzene ring. Thus formed compound is obtained by polymerizing with formaldehyde easily to form the network structure, resulting in the pore structure.

In the electrode of the fuel cell according to the present invention, preferably, the polyhydroxybenzene is dihydroxybenzene and/or dihydroxybenzene derivative.

As the dihydroxybenzene and the dihydroxybenzen derivative are relatively stable compound among polyhydroxybenzene, they may be easily handled.

In the electrode of the fuel cell according to the present invention, preferably, the dihydroxybenzene is a resorcinol. The inventors confirmed the effect using resorcinol.

In the electrode of the fuel cell according to the present invention, preferably, the water soluble organic solvent is a mixture solvent formed by mixing at least one or two of methanol, acetone and amyl acetate.

This makes it possible to easily perform the displacement between the solvent and water contained in the gel particle derived from grinding the gel material.

In the electrode of the fuel cell according to the present invention, preferably the gel particle is obtained by grinding the organic wet gel material with a ball.

The test results performed by the inventors show that in the case where the organic wet gel material is ground with the ball, the particle size of the carbon aerogel may be controlled to maintain the pore structure by appropriately selecting the grinding conditions, for example, the ball diameter, the grinding time and the like. This makes it possible to obtain the carbon aerogel with required property suitable for the intended use. The ball shape is not limited to be spherical.

It is possible to perform any other grinding process without using the ball before performing the grinding step using the ball (for example, grinding process with the homogenizer and the grinding process with the rotary type grinder without using the ball). The pore structure may be maintained by performing the grinding process using the ball at the final stage to control the particle size of the carbon aerogel.

Preferably, the ball is made of a ceramic material. Likewise, preferably the inner wall of the pot which stores the organic wet gel material together with the ball is made of ceramics. This is because fine powder of the ball or the inner wall of the pot may enter into the carbon aerogel as impurity, it is preferable to select the material depending on the usage of the carbon aerogel so as not to give an adverse effect. The material formed of stabilized zirconia, alumina, agate, and quartz may be used for forming the ball and the inner wall of the pot.

Results of the test performed by the inventors show that the gel particle with small particle size may be easily obtained by setting the diameter of the ball to 5 mm or smaller so as to prevent destruction of the pore structure. The carbon aerogel obtained at the final stage has small particle size and maintains the pore structure of the organic wet gel material. It is preferable to use the ball with the diameter of 0.65 mm or smaller.

Results of the test performed by the inventors show that the particle size of the thus obtained carbon aerogel and the pore distribution have a close relationship to the ball diameter and the grinding time. The grinding process may be performed by controlling the ball diameter and the grinding time such that the carbon aerogel with required properties may be obtained with highly reproducible manner.

Preferably, an average particle size of the carbon aerogel is equal to or larger than 1 µm. Results of the test performed by the inventors show that the pore distribution changes when the average particle size of the carbon aerogel becomes either larger or smaller than 1 µm. That is, in the case where the grinding time is made longer, or the diameter of the ball is reduced for obtaining the carbon aerogel with the particle size of 1 µm or smaller, the pore structure may be destroyed although the resultant particle size is reduced, resulting in slightly lowered pore volume fraction. If the diameter of the ball and the grinding time are controlled such that the average particle size of the carbon aerogel does not become smaller than 1 µm, the carbon aerogel with the pore distribution sufficiently maintained may be obtained.

The membrane electrode assembly of the fuel cell according to the present invention includes an electrolyte membrane, a cathode electrode having a catalyst layer assembled on one surface of the electrolyte membrane, to which air is supplied, and an anode electrode having a catalyst layer assembled on the other surface of the electrolyte membrane, to which fuel is supplied. In the membrane electrode assembly, at least one of the cathode electrode and the anode electrode includes a gas permeable base material and a catalyst layer formed on one surface of the base material, on which a catalyst is carried, and the catalyst layer contains a carbon aerogel which is obtained through a process of grinding an organic wet gel material into a gel particle, performing a solvent displacement by bringing the gel particle into contact with water soluble organic solvent, subjecting the gel particle to supercritical drying to obtain dry gel powder, and subjecting the dry gel powder to thermal decomposition.

The fuel cell system that employs the aforementioned membrane electrode assembly realizes the higher output for the reasons mentioned above.

In the membrane electrode assembly of the fuel cell according to the present invention, preferably at least one of the cathode electrode and the anode electrode has a diffusion layer formed on the other surface of the base material for diffusing the air or the fuel.

In this case, the cathode diffusion layer diffuses air to be supplied to the cathode catalyst layer, and the anode diffusion layer diffuses the fuel to be supplied to the anode catalyst layer so that the fuel cell system realizes higher outputs.

### BRIEF DESCRIPTION OF THE DRAWINGS

[FIG. 1] FIG. 1 is a process chart showing the production method for the carbon aerogel of the embodiments 1 to 15.
[FIG. 2] FIG. 2 is a graph showing each particle distribution of the carbon aerogels of embodiment 1 and the comparative examples 1 and 2.
[FIG. 3] FIG. 3 is a graph showing each pore distribution of the carbon aerogel in the embodiment 1 and the bulk carbon aerogel in the comparative example 3.
[FIG. 4] FIG. 4 is a graph showing pore distribution of the carbon aerogel in the comparative examples 2 and the bulk carbon aerogel in the comparative example 3.
[FIG. 5] FIG. 5 is a graph showing each pore distribution of the carbon aerogel in the comparative example 1 and the bulk carbon aerogel in the comparative example 3.
[FIG. 6] FIG. 6 is a graph showing each pore distribution of the carbon aerogel in the embodiments 1 and 2.
[FIG. 7] FIG. 7 is a graph showing each particle size distribution of the carbon aerogel in the embodiments 1 and 3.
[FIG. 8] FIG. 8 is a graph showing the particle size distribution of the gel particle in the embodiment 1.
[FIG. 9] FIG. 9 is a graph showing the particle size distribution of the gel particle in the embodiment 2.
[FIG. 10] FIG. 10 is a graph showing the particle size distribution of the carbon aerogel in the embodiment 1.
[FIG. 11] FIG. 11 is a graph showing the particle size distribution of the carbon aerogel in the embodiment 2.
[FIG. 12] FIG. 12 is a process chart showing the flow of the grinding process in the embodiments 4 to 15.
[FIG. 13] FIG. 13 is a graph showing the relationship between the ball diameter and the particle size of the gel particle in the embodiments 4 to 15.
[FIG. 14] FIG. 14 is a graph showing the relationship among the ball diameter, the entire pore volume of the carbon aerogel, and the BET specific surface area in the embodiments 4 to 15.
[FIG. 15] FIG. 15 is a graph showing the relationship between the average particle size of the carbon aerogel and the pore volume fraction with respect to each grinding time in the embodiments 4 to 15.
[FIG. 16] FIG. 16 is a graph showing the relationship between the average particle size of the carbon aerogel and the pore volume fraction with respect to each ball diameter in the embodiments 4 to 15.
[FIG. 17] FIG. 17 is a graph showing the relationship between the ball diameter and the pore volume fraction of the carbon aerogel with respect to each grinding time in the embodiments 4 to 15.
[FIG. 18] FIG. 18 is a graph showing the IV characteristics of the fuel cell which employs the electrode according to the embodiments 1 and 3, and the comparative examples 1 and 2.
[FIG. 19] FIG. 19 is a schematic cross sectional view showing the membrane electrode assembly and the electrode thereof employed in the fuel cell system.
[FIG. 20] FIG. 20 is a view showing the flow of manufacturing process of the carbon aerogel of the conventional art, and the comparative examples 1 and 2.

### DESCRIPTION OF CODE

90 ... membrane electrode assembly
91 ... electrolyte membrane
92, 93 ... electrode (92 ... anode electrode, 93 ... cathode electrode)
92a, 93a ... catalyst layer (92a ... anode catalyst layer, 93a ... cathode catalyst layer) 92b, 93b ... diffusion layer (92b ... anode diffusion layer, 93b ... cathode diffusion layer)
S1 ... sol-gel polymerization step
S2 ... grinding step
S3 ... solvent displacement step
S4 ... supercritical drying step
S5 ... thermal decomposition step

### BEST MODES FOR CARRYING OUT THE INVENTION

The present invention will be explained below based on the tests 1 to 5, with reference to the drawings.

### (Test 1)

Electrodes for the fuel cell according to the embodiment 1 and the comparative examples 1 and 2 were prepared as follows.

The electrodes for the fuel cell according to the embodiment 1 and the comparative examples 1 and 2 are employed for the cathode electrode 93 and the anode electrode 92 of the membrane electrode assembly that is the same as the membrane electrode assembly 90 of the conventional fuel cell system as shown in FIG. 19. The catalyst carrier used for the electrode of the fuel cell according to the embodiment 1 and the comparative examples 1 and 2 contains 100 % carbon aerogel.

The embodiment 1 is substantially the same as each of the comparative examples 1 and 2 except that the process of producing the carbon aerogel used for the cathode electrode 93 and the anode electrode 92. The explanations with respect to the same structure, thus, will be omitted.

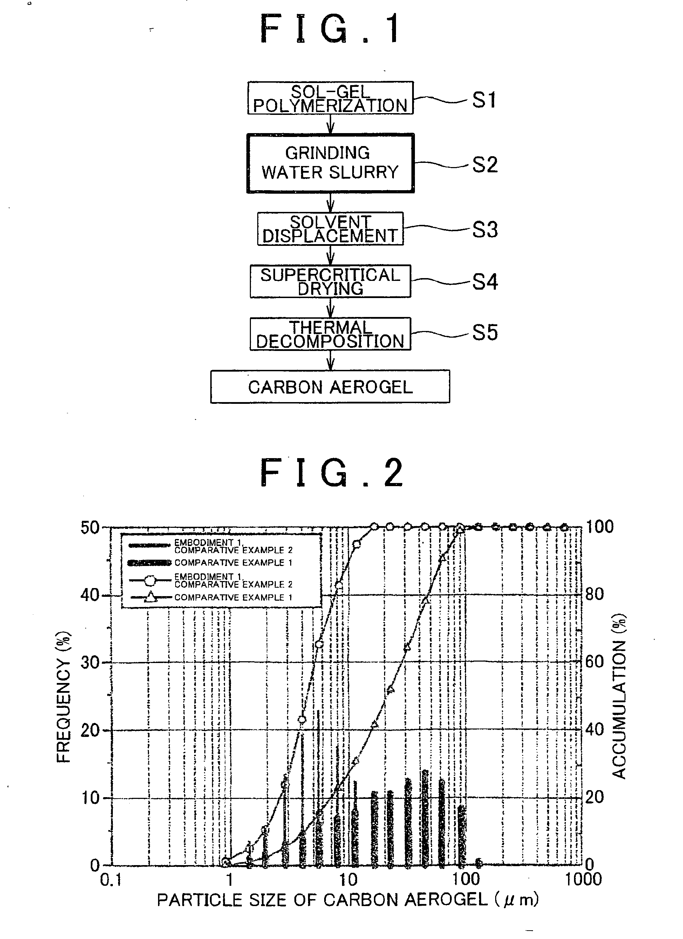

The carbon aerogel in the embodiment 1 was obtained by the process that the organic wet gel material was ground into gel particles so as to be brought into contact with the water-soluble organic solvent to perform the solvent displacement, thereafter, the gel particles were subjected to the supercritical dry process into the dry gel powder, then the dry gel powder was thermally decomposed to produce the carbon aerogel. Specifically, the carbon aerogel is produced through the process shown in FIG. 1 as described below.

### (Sol-gel polymerization step S1)

In the sol-gel polymerization step S1, 4g of resorcinol, 5.5 ml of water solution of 37% formaldehyde, 0.019 g of 99.5 % sodium carbonate powder, and 16 ml of ionexchange water were mixed and stirred for 3 hours. The mixture was then left at the room temperature for 24 hours, at 50°C for 24 hours, and at 90°C for 72 hours for aging to obtain the gel material.

### (Grinding step S2)

The above-obtained gel material was subjected to decantation with the ionexchange water, and ground with the planetary ball mill in the presence of water to obtain slurry of gel particles. The planetary ball mill has its ball and the inner wall of the pot formed of stabilized zirconia. The ball diameter was 5 mm, the revolution number was 255 rpm, and the rotating number was 550 rpm.

### (Solvent displacement step S3)

In the solvent displacement step S3, the slurry was washed with acetone five times through the adsorption filtration process to be caked.

### (Supercritical dry step S4)

Further, in the supercritical dry step S4, the cake was put into a stainless steel pressure vessel, into which CO2 was introduced, and the pressure and the temperature were adjusted to be brought into the supercritical state. Then CO₂ was gradually discharged into the gas phase so as to perform the supercritical drying to obtain the dry gel powder.

### (Thermal decomposition step S5)

At the end, in the thermal decomposition step S5, the above-obtained dry gel powder was put into the electric furnace so as to be heated at 1000 °C for 4 hours in the presence of nitrogen, and thereafter, it was cooled to obtain the powder carbon aerogel with the average particle size of 5 µm.

In contrast, the carbon aerogel in the comparative examples 1 and 2 was obtaoned by the process that the organic wet gel material was brought into contact with the water soluble organic solvent so as to be subjected to the solvent displacement, thereafter, the gel material was supercritical dried into the dry gel material which was further subjected to the thermal decomposition process to obtain the carbide of the dry gel material, then the dry gel material was ground to obtain the carbon aerogel. Specifically, the carbon aerogel was produced through the conventional producing process of the carbon aerogel as shown in FIG. 20. Although the details is as descrived above, thus ,will be omitted, the materials used in the sol-gel polymerization in S91, and the ratio of blending performed therein are the same as those in the sol-gel polymerization step S1 of the process for producing the carbon aerogel used for the electrode of the fuel cell of the embodiment 1.

The carbon aerogels in the comparative examples 1 and 2 were produced by different grinding capacity in grinding step 595.

In the comparative example 1, the shear coarse grinder was used. The rotating number of the blade was 20000 rpm, and the grinding was performed for 3 minutes to obtain the carbon aerogel powder with the average particle size of 30 µm.

In the comparative example 2, the planetary ball mill was used as same as the embodiment 1. The ball diameter was mm, the revolution number was 255 rpm, and the rotating number was 550 rpm. The grinding was performed for 2 hours to obtain the carbon aerogel powder with the average particle size of 5 µm.

The bulk carbon aerogel as the block of carbide of the dry gel material which was obtained in the thermal decomposition step S94 in the course of producing the carbon aerogel in the comparative examples 1 and 2 was defined as the carbon aerogel in the comparative example 3. As the aforementioned carbon aerogel was not ground, the pore structure formed by cross-linking of the formaldehyde in the sol-gel polymerization step S91 was maintained.

The test conditions for the embodiment 1, and the comparative examples 1 to 3 are shown in the following table 1.

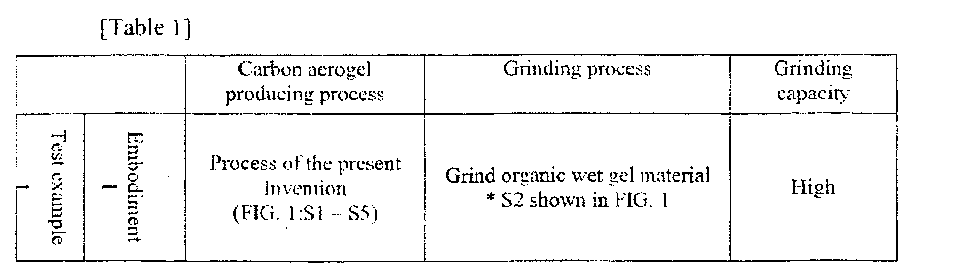

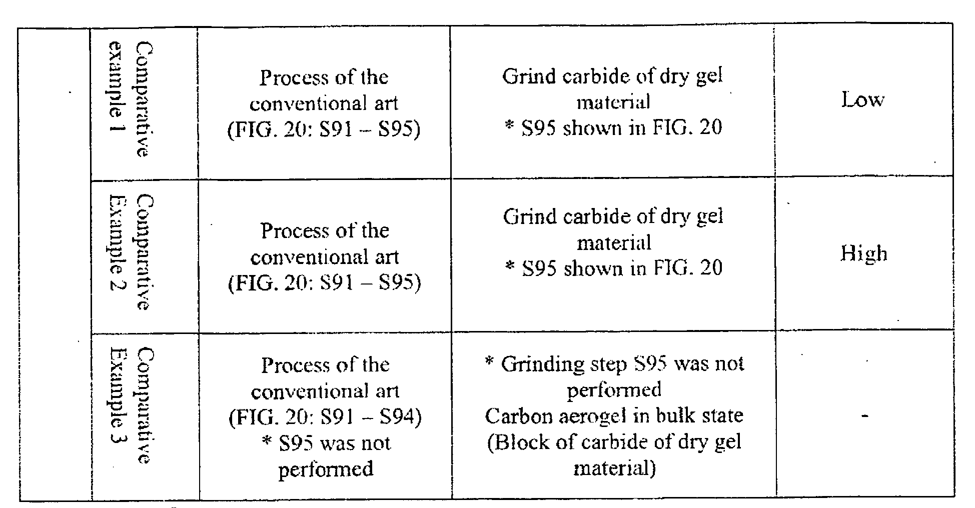

The electrodes for the fuel cell thus obtained in the embodiment 1 and the comparative examples 1 and 2 are employed to form the membrane electrode assembly 90 shown in FIG. 19. The membrane electrode assembly 90 is interposed between the separators (not shown) to form a cell of the fuel cell as a minimum power generation unit. A large number of those cells are laminated to form a fuel cell stack. Air is supplied to the cathode catalyst layer 93a by the air supply mechanism, and fuel is supplied to the anode catalyst layer 92a by the fuel supply mechanism. The fuel cell system is thus formed.

In the membrane electrode assembly 90, the electrochemical reactions occur both in the anode catalyst layer 92a and the cathode catalyst layer 93 a successively to allow the fuel cell system to generate the electromotive force continuously.

The comparative evaluations for the carbon aerogels produced in the embodiment 1 and the comparative examples 1 and 2, were carried out as below.

### (1) Particle size distribution

FIG. 2 is a graph showing each particle size distribution of the carbon aerogels produced in the embodiment 1, and the comparative examples 1 and 2.

AS shown in FIG. 2, each average particle size of the carbon aerogel in the embodiment 1 and the comparative example 2 is a considerably small value of several µm, and the particle size values fall within a specific narrow range. The use of the grinder with high grinding capacity allows the carbon aerogel of the comparative example 2 to have particles sufficiently ground in the grinding steps S2 and S95, respectively.

In contrast, the average particle size of the carbon aerogel of the comparative example 1 is several tens of µm, and the particle size values are distributed in a wide range. This indicates that particles of the carbon aerogel of the comparative example 1 has not been sufficiently ground in the grinding step S95 by the grinder with low grinding capacity.

### (2) Pore distribution

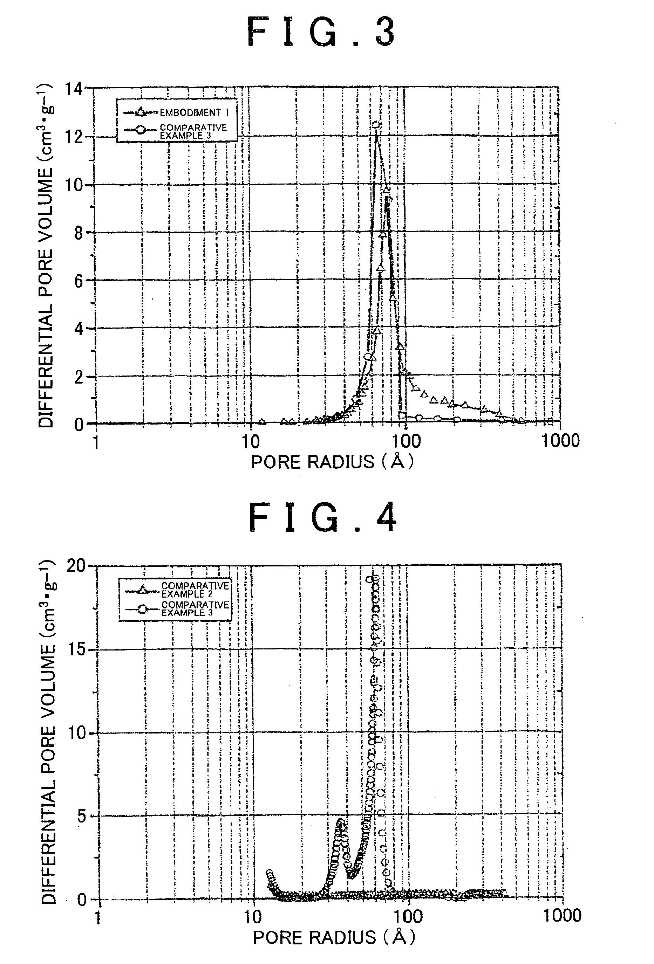

FIG. 3 is a graph showing each relationship between the pore radius (Å) and the differential pore volume ((cm³/g), the pore distribution was measured using N₂ adsorption method) of each carbon aerogel in the embodiment 1 and the comparative example 3.

AS shown in FIG. 3, as the carbon aerogel of the comparative example 3 is not ground, the pore structure formed by cross-linking of the formaldehyde in the sol-gel polymerization step S91 is maintained as it is.

Meanwhile, the carbon aerogel of the embodiment 1 has the differential pore volume slightly smaller than that of the carbon aerogel of the comparative example 3, but sufficiently maintains the pore structure formed in the producing process. In the embodiment 1, as the grinding process was performed in the state where water was contained in pores of the gel material in the grinding step S2, those pores were protected by the cushion effect of water compared with the grinding process in the dry state. Accordingly, they became unlikely to be destroyed.

FIG. 4 is a graph showing relationship between the pore radius and the differential pore volume of each carbon aerogel in the comparative examples 2 and 3.

The differential pore volume of the carbon aerogel of the comparative example 2 is considerably smaller than that of the carbon aerogel of the comparative example 3, and most of the pore structure formed in the producing process has been destroyed. In the comparative example 2, the block of carbide of the dry gel material was ground in the grinding step S95 in the absence of water that gives the cushion effect as in the grinding step S2 of the embodiment 1. The use of the grinder with high grinding capacity is considered to greatly influence the destruction of the pore structure.

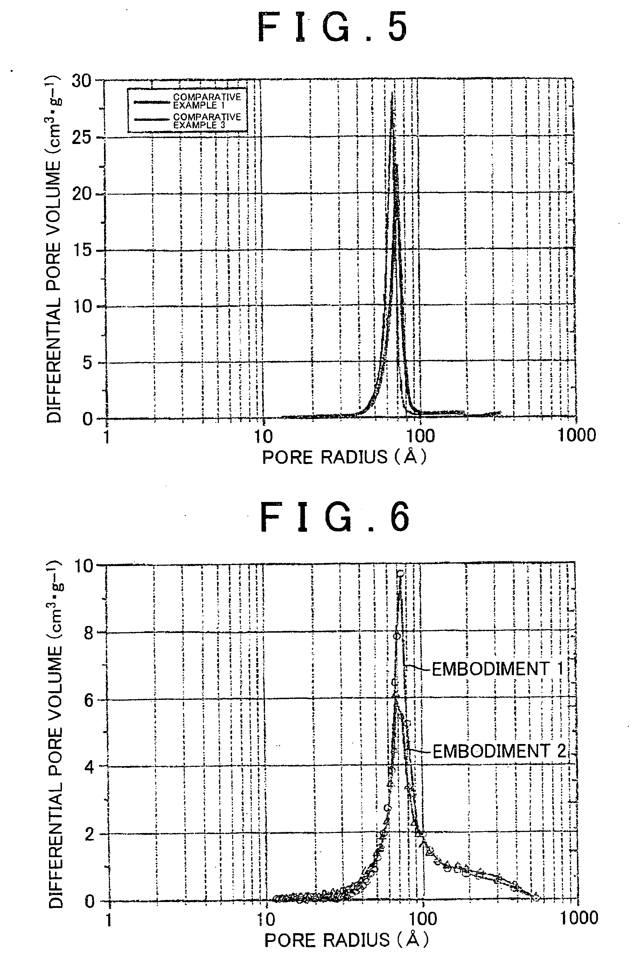

FIG. 5 is a graph showing each relationship between the pore radius and the differential pore volume of each carbon aerogel in the comparative examples 1 and 3.

In the comparative example 1, the grinder with low grinding capacity was employed unlike the comparative example 2, and accordingly, the particles of the carbon aerogel have not been sufficiently ground as shown in FIG. 2. The carbon aerogel of the comparative example 1 has the differential pore volume slightly smaller than that of the carbon aerogel of the comparative example 3, but sufficiently maintains the pore structure formed in the producing process.

### (Test 2)

Each value of the BET specific surface area (m²/g) and pore volume (cm³/g) of carbon aerogels each produced under the different grinding conditions were compared.

In the embodiment 1 where the grinding was performed for 2 hours, the carbon aerogel measured the BET specific surface area of 629 (m²/g) and the pore volume of 2.00 (cm³/g).

In the embodiment 2 where the grinding was performed for 4 hours, the carbon aerogel measured the BET specific surface area of 632 (cm²/g) and the pore volume of 1.83 (cm³/g). Other producing conditions of the embodiment 2 are the same as those of the embodiment 1.

In the comparative example 2, the carbon aerogel measured the BET specific surface area of 105 (m²/g) and the pore volume of 0.25 (cm³/g).

In the comparative example 3 where the grinding step was not performed, the carbon aerogel in the bulk state measured the BET specific surface area of 670 (cm²/g) and the pore volume of 2.17 (cm³/g).

FIG. 6 is a graph showing each relationship between the pore radius and the differential pore volume of the carbon aerogels in the embodiments 1 and 2.

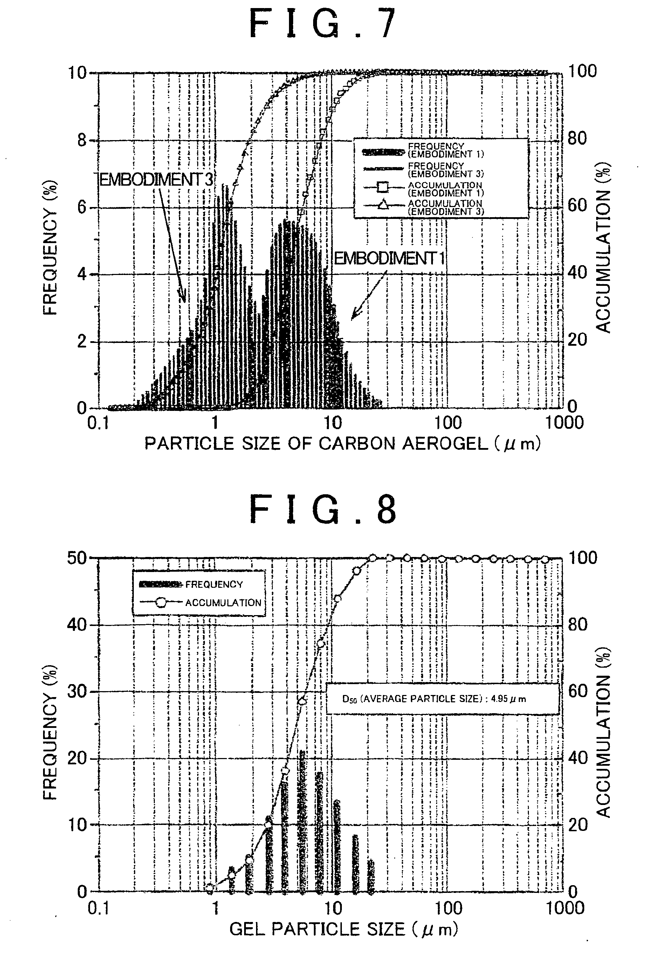

The carbon aerogel of the embodiment 3 was also prepared. The same planetary ball mill as the embodiment 1 was used in the grinding step S2. The gel material was ground for 2 hours under the condition where the ball diameter was 5 mm, the revolution number was 255 rpm, and the rotation number was 550 rpm. The gel material was then further ground for one hour under the condition where the ball diameter was changed to 0.65 mm, the revolution number was 255 rpm, and the rotation number was 550 rpm so as to obtain the carbon aerogel powder with the average particle size of 1 µm. Other conditions in the embodiment 3 were the same as those of the embodiment 1. Each particle size distribution of the carbon aerogels in the embodiments 1 and 3 is shown in FIG. 7.

As shown in FIGS. 6 and 7, the carbon aerogels of the embodiments 1 to 3 have different pore distributions. It becomes clear that the pore distribution of the carbon aerogel may be controlled by adjusting the grinding time in the grinding step S2.

### (Test 3)

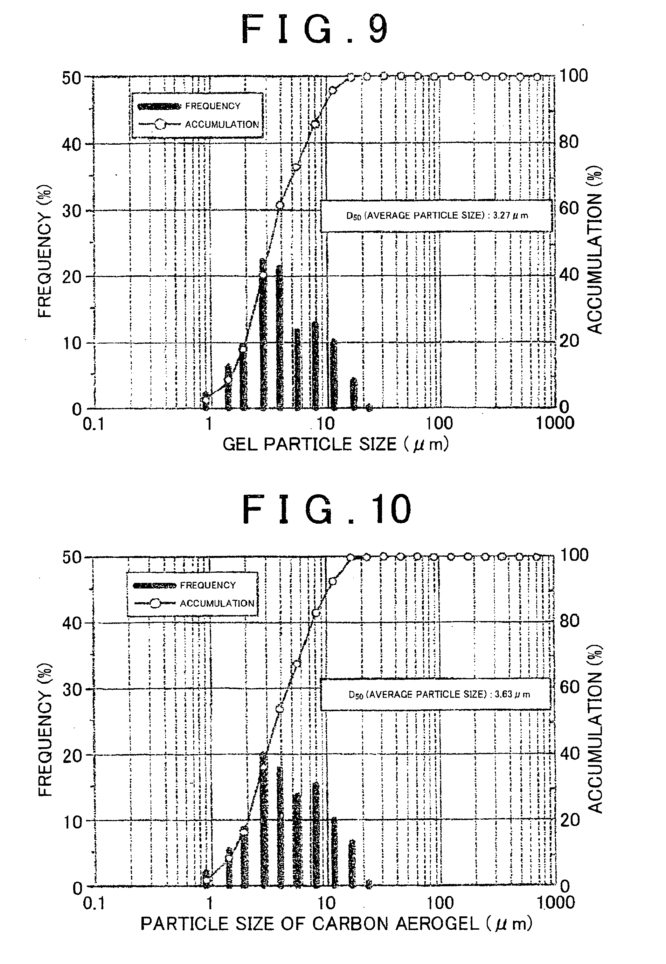

The particle size distribution of the gel particle contained in the slurry formed after the grinding step S2 is shown in FIGS. 8 and 9. FIG. 8 shows the result of the embodiment 1 where the grinding was performed for 2 hours, and FIG. 9 shows the result of the embodiment 2 where the grinding was performed for 4 hours.

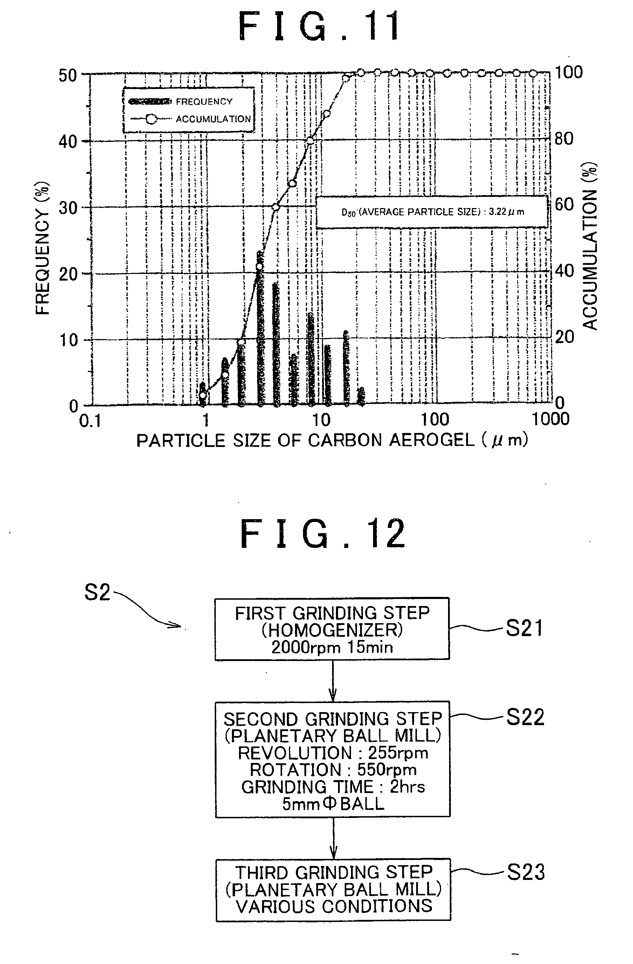

The particle size distribution of the carbon aerogels after the thermal decomposition step S5 is shown in FIGS. 10 and 11. FIG. 10 shows the result of the embodiment 1 where the grinding was performed for 2 hours, and FIG. 11 shows the result of the embodiment 2 where the grinding was performed for 4 hours.

Comparisons between FIGS. 8 and 10, and between FIGS. 9 and 11 show that the particle size distribution of the gel particle contained in the slurry is substantially the same as that of the carbon aerogel. It also becomes clear that the particle size distribution of the carbon aerogel may be controlled by adjusting the grinding time in the grinding step S2.

### (Test 4)

The relationship between the grinding conditions of the gel material and properties of the carbon aerogel was analyzed. The grinding step S2 was performed in three stages as shown in FIG. 12.

In the first grinding step S21, the gel material obtained through the same sol-gel polymerization step S1 as in the embodiments 1 to 3 was ground using the homogenizer (rotation number: 2000 rpm and grinding time: 15 minutes).

Then in the second grinding step S22, the ground product obtained in the first grinding step S21 was put into the pot of the planetary ball mill together with the ball with the diameter of 5 mm formed of the stabilized zirconia such that the grinding was performed (revolution number: 255 rpm, rotation number: 550 rpm, and grinding time: 2 hours).

In the third grinding step S23, as shown in Table 2, the grinding was further performed using the planetary ball mill under the condition where the diameter of the ball formed of the stabilized zirconia was changed, and the grinding time was also changed. Then slurries of the embodiments 4 to 15 were obtained. They were subjected to the same solvent displacement step S3, the supercritical dry step S4 and the thermal decomposition step S5 as the embodiments 1 to 3 to obtain the carbon aerogel.

**(Table 2)**

| | Rotation number (rpm) | | Grinding time (time) | Ball diameter (mm) |
|---|---|---|---|---|
| | Revolution | Rotation | | |
| Embodiment 4 | 255 | 550 | 1 | 5 |
| Embodiment 5 | 255 | 550 | 2 | 5 |
| Embodiment 6 | 255 | 550 | 1 | 3 |
| Embodiment 7 | 255 | 550 | 2 | 3 |
| Embodiment 8 | 255 | 550 | 1 | 2 |
| Embodiment 9 | 255 | 550 | 2 | 2 |
| Embodiment 10 | 255 | 550 | 1 | 1 |
| Embodiment 11 | 255 | 550 | 2 | 1 |
| Embodiment 12 | 255 | 550 | 0.5 | 0.65 |
| Embodiment 13 | 255 | 550 | 1 | 0.65 |
| Embodiment 14 | 255 | 550 | 0.5 | 0.3 |
| Embodiment 15 | 255 | 550 | 1 | 0.3 |

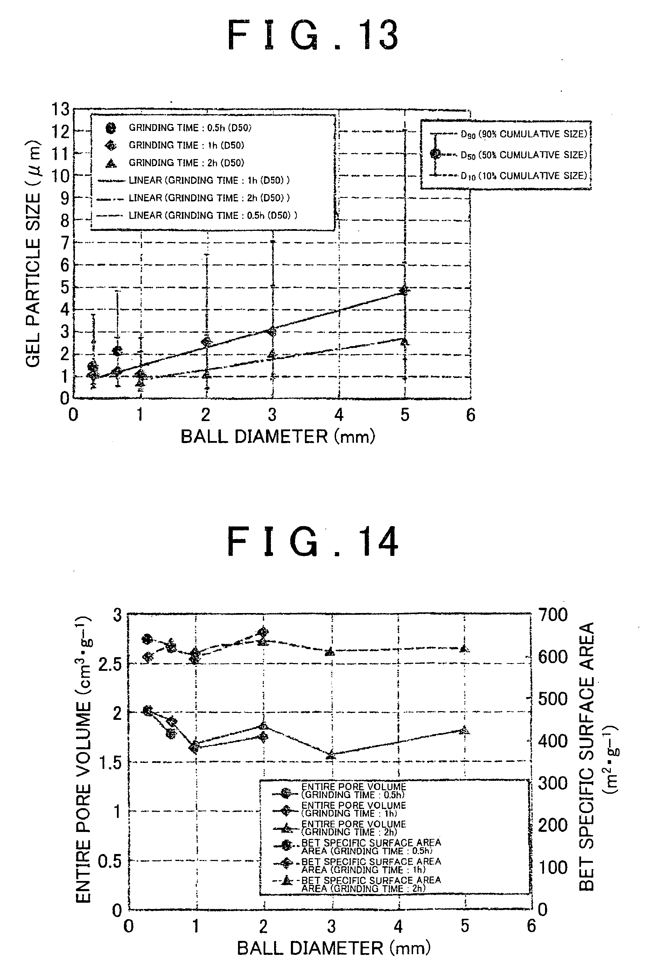

Each particle size distribution of the slurries in the embodiments 4 to 15 obtained in the third grinding step S23 was measured through laser diffraction/scattering method. The results are shown in FIG. 13.

FIG. 13 shows that as the diameter of the ball used in the third grinding step S23 was reduced, the particle size of the gel particle contained in the slurry became small, and as the grinding time in the third grinding step S23 was made longer, the particle size of the gel particle contained in the slurry became small.

In consideration with the aforementioned results, it becomes clear that the carbon aerogel with the desired particle size in accordance with the intended use may be obtained by controlling the grinding time and the ball diameter.

The entire pore volume (cm³/g) and the BET specific surface area (cm²/g) of each carbon aerogel obtained in the embodiments 4 to 15 were measured through the nitrogen adsorption method. The measurement results are shown in FIG. 14. The considerable difference in the results owing to the difference in the conditions of the third grinding step S23 was not observed.

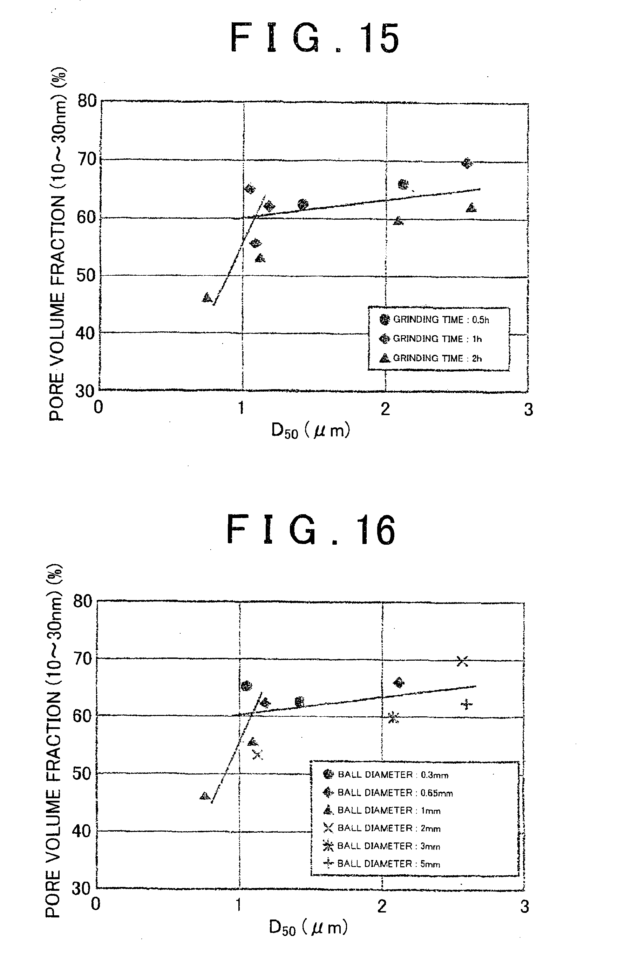

The average particle sizes (µm) and pore volume fractions ranging from 10 to 30 nm ((%), ratio of the pore volume ranging from 10 to 30 nm to the meso pore volume derived from the desorption side of the nitrogen adsorption isotherm) of the carbon aerogels obtained in the embodiments 4 to 15 were plotted as shown in FIGS. 15 and 16.

FIGS. 15 and 16 show that the pore volume fraction sharply drops when the average particle size of the carbon aerogel is smaller than 1 µm. It becomes clear that the pore structure becomes unlikely to be damaged under appropriate control of the grinding conditions such that the particle size of the carbon aerogel is not smaller than 1 µm. FIG. 15 shows that the pore volume fraction is reduced depending on the grinding time in the third grinding step S23. FIG. 16 shows that the pore volume may be held by adjusting the grinding time so long as the ball diameter is equal to or smaller than 5 mm. If the ball diameter is equal to or smaller than 0.65 mm, the pore volume becomes more likely to be maintained.

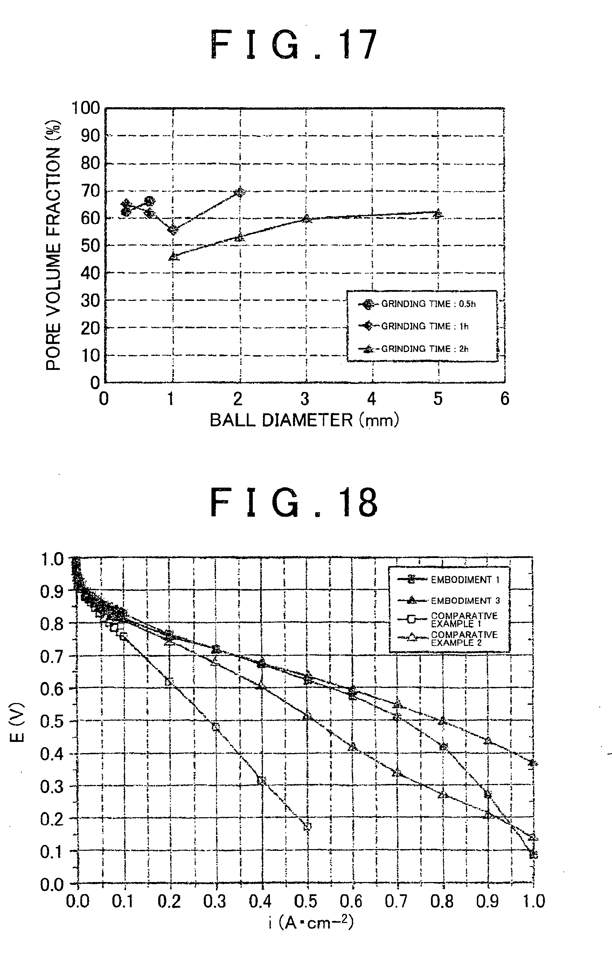

The ball diameters (mm) used in the third grinding step S23 and the pore volume fraction values (%) of the obtained carbon aerogels in the embodiments 4 to 15 were plotted as shown in FIG. 17.

As shown in FIG. 17, the pore volume fraction of the carbon aerogel hardly changes when the ball diameter is equal to or smaller than 5 mm, and accordingly, the pore structure is likely to be maintained. The pore volume fraction may be maintained well especially in the case where the ball diameter value is set to 0.3 mm or 0.65 mm.

In consideration with the aforementioned results, it is clear that the particle size of the carbon aerogel and the pore distribution are closely related to the ball diameter and the grinding time. Consequently, the carbon aerogel with the required property in accordance with the intended use may be obtained with highly reproducible manner by performing the grinding step S2 under the control of the ball diameter and the grinding time.

### (Test 5)

The fuel cells which employ the electrodes in the embodiments 1 and 3, and the comparative examples 1 and 2 to the cathode electrode 93 and the anode electrode 92 were compared for evaluation as described below.

### (3) Comparison with respect to IV characteristic of fuel cell

FIG. . 18 is a graph showing each IV characteristic of the fuel cell that employs the electrode of the embodiments 1 and 3 and the comparative examples 1 and 2, respectively.

As shown in FIG. 18, with respect to the degree of the voltage drop in the case where the current value of the fuel cell rises, the value of such degree became larger in the order from the fuel cell with the electrode of the embodiment 3 as being the smallest, the fuel cell with the electrode of the embodiment 1, the fuel cell with the electrode of the comparative example 2, and the fuel cell with the electrode of the comparative example 1. This is because each average particle size of the carbon aerogels of the embodiments 1 and 3 was substantially small value of several µm, the most particle size values were in the specific narrow range, and the pore structure formed in the producing process was maintained compared with those of the comparative examples 1 and 2. The comparison between the embodiments 1 and 3 shows that it is preferable to make the particle of the carbon aerogel small so as not to be less than the average particle size of 1µm.

The results of (1) to (3) clearly show that the electrodes of the fuel cells in the embodiments 1 and 3 provide the following effects.

In the embodiments 1 and 3, the organic wet gel material was ground, and then subjected to the solvent displacement to produce the carbon aerogel. The grinding was performed in the presence of water contained in the pores of the gel material. Unlike the grinding in the dry state, the pores were protected by the cushion effect of water, which made the pore structure unlikely to be destroyed. In the embodiments 1 and 3, as the organic wet gel material was preliminarily ground, the time for the solvent displacement was reduced.

The carbon aerogels of the embodiments 1 and 3 maintain the pore structures that those of the gel material are reflected. The carbon aerogels of the embodiments 1 and 3 suppress destruction of the most part of the pore structures as often observed in the conventional carbon aerogel. The carbon aerogels of the embodiments 1 and 3 also suppress the difficulty in sufficient reduction of the particle size as often observed in the conventional carbon aerogel.

The electrodes of the embodiments 1 and 3 are capable of exhibiting sufficient gas permeability while maintaining the pore structure of the carbon aerogel. This makes it possible to allow the fuel cell system that employs the aforementioned electrodes to perform further higher outputs resulting from the sufficient catalytic function.

As the particle size of the carbon aerogel of each electrode of the embodiments 1 and 3 may be made sufficiently small of several µm, the thickness is reduced certainly. The electrode has the low resistance, which allows the fuel cell system to perform higher outputs.

The electrodes of the embodiments 1 and 3 make it possible to realize the fuel cell system capable of performing the higher outputs.

The present invention has been described referring to the embodiments 1 to 15. Note that the scope of the present invention is not limited by the embodiments above, and various modifications are possible within the scope of the claims for the present invention.

### INDUSTRIAL APPLICABILITY

The present invention is applicable to the moving power source for an electric vehicle and the like, or the stationary power source thereof.

## Claims

1. An electrode of a fuel cell including a gas permeable base material and a catalyst layer formed on one surface of the base material, on which a catalyst is carried, wherein the catalyst layer contains a carbon aerogel which is obtained through a process of grinding an organic wet gel material into a gel particle, performing solvent displacement by bringing the gel particle into contact with water soluble organic solvent, subjecting the gel particle to supercritical drying to obtain dry gel powder, and subjecting the dry gel powder to thermal decomposition.

2. The electrode of a fuel cell according to claim 1, wherein the organic wet gel material is formed by polymerizing polyhydroxybenzene and formaldehyde in the presence of a base catalyst.

3. The electrode of a fuel cell according to claim 2, wherein the polyhydroxybenzene is at least one of dihydroxybenzene and dihydroxybenzene derivative

4. The electrode of a fuel cell according to claim 3, wherein the dihydroxybenzene is a resorcinol.

5. The electrode of a fuel cell according to any one of claims 1 to 4, wherein the water soluble organic solvent is a mixture solvent formed by mixing at least one or two of methanol, acetone and amyl acetate.

6. The electrode of a fuel cell according to claim 1, wherein the gel particle is obtained by grinding the organic wet gel material with a ball.

7. The electrode of a fuel cell according to claim 6, wherein the ball is made of a ceramic material.

8. The electrode of a fuel cell according to claim 1, wherein an average particle size of the carbon aerogel is equal to or larger than 1 µm.

9. A membrane electrode assembly of the fuel cell including an electrolyte membrane, a cathode electrode having a catalyst layer assembled on one surface of the electrolyte membrane, to which air is supplied, and an anode electrode having a catalyst layer assembled on the other surface of the electrolyte membrane, to which fuel is supplied, wherein:
at least one of the cathode electrode and the anode electrode includes a gas permeable base material and a catalyst layer formed on one surface of the base material, on which a catalyst is carried;
the catalyst layer contains a carbon aerogel which is obtained through a process of grinding an organic wet gel material into a gel particle, performing a solvent displacement by bringing the gel particle into contact with water soluble organic solvent, subjecting the gel particle to supercritical drying to obtain dry gel powder, and subjecting the dry gel powder to thermal decomposition.

10. The membrane electrode assembly according to claim 9, wherein at least one of the cathode electrode and the anode electrode has a diffusion layer formed on the other surface of the base material for diffusing the air or the fuel.

## Patentansprüche

1. Elektrode für eine Brennstoffzelle mit einem gasdurchlässigen Basismaterial und einer Katalysatorschicht, die auf einer Seite des Basismaterials ausgebildet ist, auf dem sich ein Katalysator befindet, wobei die Katalysatorschicht ein Kohlenstoff-Aerogel enthält, das durch Schleifen eines organischen Feuchtgelmaterials zu Gelpartikel erhalten wird, und zwar durch Ausführen einer Lösungsmittelverschiebung, indem das Gelpartikel mit einem in Wasser löslichen, organischen Lösungsmittel in Kontakt gebracht wird, superkritisches Trocknen des Gelpartikels, um ein trockenes Gelpulver zu erhalten, und thermische Zersetzung des trockenen Gelpulvers.

2. Elektrode für eine Brennstoffzelle nach Anspruch 1, wobei das organische Feuchtgelmaterial erhalten wird durch Polymerisierung von Polyhydroxybenzol und Formaldehyd in Gegenwart eines Basiskatalysators.

3. Elektrode für eine Brennstoffzelle nach Anspruch 2, wobei das Polyhydroxybenzol eine Dihydroxybenzol und/oder ein Dihydroxybenzol-Derivativ ist.

4. Elektrode für eine Brennstoffzelle nach Anspruch 3, wobei das Dihydroxybenzol ein Resorcinol ist.

5. Elektrode für eine Brennstoffzelle nach einem der Ansprüche 1 bis 4, wobei das wasserlösliche organische Lösungsmittel ein Lösungsmittelgemisch ist, das durch Mischen von mindestens einem oder zwei aus Methanol, Aceton und Amylacetat gebildet wird.

6. Elektrode für eine Brennstoffzelle nach Anspruch 1, wobei das Gelpartikel durch Schleifen des organischen Feuchtgelmaterials mit Hilfe einer Kugel erhalten wird.

7. Elektrode für eine Brennstoffzelle nach Anspruch 6, wobei die Kugel aus einem Keramikmaterial hergestellt ist.

8. Elektrode für eine Brennstoffzelle nach Anspruch 1, wobei die mittlere Teilchengröße des Kohlenstoff-Aerogels gleich oder größer ist als 1 µm.

9. Membranelektrodenanodnung für eine Brennstoffzelle mit einer Elektrolytmembran, einer Kathodenelektrode mit einer Katalysatorschicht, die auf einer Oberfläche der Elektrolytmembran ausgebildet ist, der Luft zugeführt wird, und einer Anodenelektrode mit einer Katalysatorschicht, die auf der anderen Oberfläche der Elektrolytmembran ausgebildet ist, der Brennstoff zugeführt wird, wobei:
die Kathodenelektrode und/oder die Anodenelektrode ein gasdurchlässiges Basismaterial und eine Katalysatorschicht aufweist, die auf einer Oberfläche des Basismaterials ausgebildet ist, auf der sich ein Katalysator befindet; und
die Katalysatorschicht ein Kohlenstoff-Aerogel enthält, das durch Schleifen eines organischen Feuchtgelmaterials zu einem Gelpartikel erhalten wird, nämlich durch Ausführen einer Lösungsmittelverschiebung, indem das Gelpartikel mit einem wasserlöslichen, organischen Lösungsmittel in Kontakt gebracht wird, superkritisches Trocknen des Gelpartikels zum Erhalten von trockenem Gelpulver und durch thermische Zersetzung des trockenen Gelpulvers.

10. Membranelektrodenanodnung nach Anspruch 9, wobei die Kathodenelektrode und/oder die Anodenelektrode zur Diffusion der Luft oder des Brennstoffs eine Diffusionsschicht aufweist, die auf der anderen Oberfläche des Basismaterials ausgebildet ist.

## Revendications

1. Electrode de cellule à combustible comprenant un matériau de base perméable aux gaz et une couche catalytique formée sur une surface du matériau de base, supportant un catalyseur, où la couche catalytique contient un aérogel de carbone obtenu au moyen d'un procédé de fragmentation d'une matière organique gélifiée humide pour former une particule de gel, d'exécution d'un déplacement de solvant en mettant la particule de gel en contact avec un solvant organique soluble dans l'eau, d'exposition de la particule de gel à un séchage supercritique pour obtenir un poudre de gel sèche, et d'exposition de la poudre de gel sèche à une décomposition thermique.

2. Electrode de cellule à combustible selon la revendication 1, où la matière organique gélifiée humide est formée par polymérisation de polyhydroxybenzène et de formaldéhyde en présence d'un catalyseur de base.

3. Electrode de cellule à combustible selon la revendication 2, où le polyhydroxybenzène est au moins un élément du groupe constitué de dihydroxybenzène et d'un dérivé du dihydroxybenzène.

4. Electrode de cellule à combustible selon la revendication 3, où le dihydroxybenzène est un résorcinol.

5. Electrode de cellule à combustible selon l'une quelconque des revendications 1 à 4, où le solvant organique soluble dans l'eau est un solvant mixte formé par mélange d'au moins un ou deux éléments du groupe constitué de méthanol, d'acétone et d'acétate d'amyle.

6. Electrode de cellule à combustible selon la revendication 1, où la particule de gel est obtenue par fragmentation au moyen d'une bille de la matière organique gélifiée humide.

7. Electrode de cellule à combustible selon la revendication 6, où la bille est en matériau céramique.

8. Electrode de cellule à combustible selon la revendication 1, où une dimension moyenne de particule de l'aérogel de carbone est supérieure ou égale à 1 µm.

9. Ensemble d'électrode à membrane de la cellule à combustible incluant une membrane électrolytique, une électrode à cathode dotée d'une couche catalytique montée sur une surface de la membrane électrolytique, alimentée en air, et une électrode à anode dotée d'une couche catalytique montée sur l'autre surface de la membrane électrolytique, alimentée en combustible, où :
au moins une électrode parmi l'électrode à cathode et électrode à anode comprend un matériau de base perméable aux gaz et une couche catalytique formée sur une surface du matériau de base, supportant un catalyseur ;
la couche catalytique contient un aérogel de carbone obtenu au moyen d'un procédé de fragmentation d'une matière organique gélifiée humide pour former une particule de gel, d'exécution d'un déplacement de solvant en mettant la particule de gel en contact avec un solvant organique soluble dans l'eau, d'exposition de la particule de gel à un séchage supercritique pour obtenir un poudre de gel sèche, et d'exposition de la poudre de gel sèche à une décomposition thermique.

10. Ensemble d'électrode à membrane selon la revendication 9, où au moins une électrode parmi l'électrode à cathode et électrode à anode est dotée d'une couche de diffusion formée sur l'autre surface du matériau de base et destinée à la diffusion de l'air ou du combustible.
